# EUROPEAN PATENT SPECIFICATION

(11) **EP 0 845 411 B1**
(45) Date of publication and mention of the grant of the patent: **13.02.2002**
(21) Application number: 97309583.9
(22) Date of filing: 27.11.1997
(51) Int. Cl.: B65B 9/02, B65D 75/30

(54) **Package for an inclusion product and process for making same**
Verpackung für Inklusionsprodukt und Verfahren zu seiner Herstellung
Emballage pour produit d'inclusion et son procédé de fabrication

(30) Priority: 29.11.1996 JP 33305796
(43) Date of publication of application: 03.06.1998
(73) Proprietor: KABUSHIKI KAISHA HAYASHIBARA SEIBUTSU KAGAKU KENKYUJO, Okayama-shi Okayama (JP)
(72) Inventor: Otsu, Kyoichi, Kobe-shi, Hyogo (JP); Yamashita, Naoko, Kobe-shi, Hyogo (JP); Okumura, Yoshiji, Matsubara-shi, Osaka (JP); Miyake, Toshio, Okayama-shi, Okayama (JP)
(74) Representative: Daniels, Jeffrey Nicholas

(56) References cited:
- EP-A- 0 525 530
- EP-A- 0 744 341
- US-A- 4 420 518
- US-A- 4 782 647

## Description

The present invention relates to an inclusion packaged product and a process for producing the same, more particularly, to an inclusion packaged product that encloses a thin-leaf article with a sheet-like material, and a process for producing the same.

Recently, laminated cachous have become popular. For example, as disclosed in Japanese Patent Kokai No.236,885/93, conventional cachous are prepared by shaping compositions, which contain along with polysaccharides with a satisfactory membrane-formability, viscous stabilizers, plasticizer, flavors, sweeteners, substances with acid or sourness, and extracts, into sheet-like products, and cutting the sheet-like products into thin-leaves. The cachous thus obtained are packaged into containers in a prescribed number of leaves, then supplied for users. Such cachous are, however, relatively-small in size and easily stuck on together so that they should be packaged by hands one by one in containers while counting, resulting in an increase of the production cost.

Not restricted to cachous, it is widely tried to shape products into thin-leaf products in food, cosmetic, and pharmaceutical fields. These thin-leaf products are easily handleable and transportable for users, and can be advantageously used in any numbers of leaves wherever you are, i.e., independently of indoors and outdoors, by taking them out from containers. From producers' sides, however, there still exists a troublesome difficulty in handling of the above products during their packaging even if shaped into thin-leaf products similarly as in cachous, and in some cases, the products are even supplied to users without substantially being packaged to lower the increase of their production costs.

Another example, with perfume samplers, is known from document EP 0 525 530 A.

The output of the above thin-leaf products directly reflects today's diversified consuming-life-style. It has been strongly demanded a packaging technique for thin-leaf products that fulfills user's needs and ensures satisfactory hygiene and handleability.

In view of the foregoing, the first object of the present invention is to provide an inclusion packaged product containing a thin-leaf inclusion article which has a satisfactory handleability and does not contact with external atmosphere.

The second object of the present invention is to provide a process for producing such an inclusion packaged product in a relatively-low production cost.

The present inventors' energetic study revealed that the above objects can be solved by an inclusion packaged product comprising an inclusion cell formed by a base sheet and an overlapping sheet, and a thin-leaf inclusion article enclosed in the inclusion cell in a manner that it can be freely detached from the base sheet.

The first object of the present invention is solved by an inclusion packaged product, which comprises an inclusion cell comprising a base sheet and an overlapping sheet, and a thin-leaf inclusion article enclosed in said inclusion cell in a manner that said thin-leaf inclusion article can be freely detached from said base sheet, characterised in that the thin-leaf inclusion article contains a water-soluble polymer at a concentration of about 10 to 50 % by weight of article.

The second object of the present invention is solved by a process for producing the inclusion packaging product which comprises the steps of: (1) providing a solution of an inclusion article containing a water-soluble polymer; (2) coating a base sheet with the solution of the inclusion article; (3) drying the solution coated on the base sheet; and (4) placing an overlapping sheet on the base sheet and sealing prescribed sections to the sheets to surround the area coated with the solution, wherein the water-soluble polymer is present in the thin-leaf inclusion article at a concentration of about 10 to 50 % by weight of article to that the thin-leaf inclusion article can be freely detached from the base sheet.

FIG. 1 is the plain view of the inclusion packaged product according to the present invention.

FIG. 2 is a longitudinal side elevation view of the inclusion packaged product according to the present invention.

FIG. 3 is a production scheme of the process according to the present invention.

FIG. 4 is a squint view of a coating roll usable in the present invention.

Throughout the figures, the reference numeral "1" shows inclusion packaged product; "2", inclusion cell; "3", sealed section; "4", thin-leaf inclusion article; "5", base sheet reservoir roll; "6", base sheet; "7", "8" and "9", sending rolls; "10", product-winding roll; "11", coating roll; "12", reservoir tank; "13", projection; "14", dryer; "15", reservoir roll for overlapping sheet; "16", overlapping sheet; and "17", sealing machine.

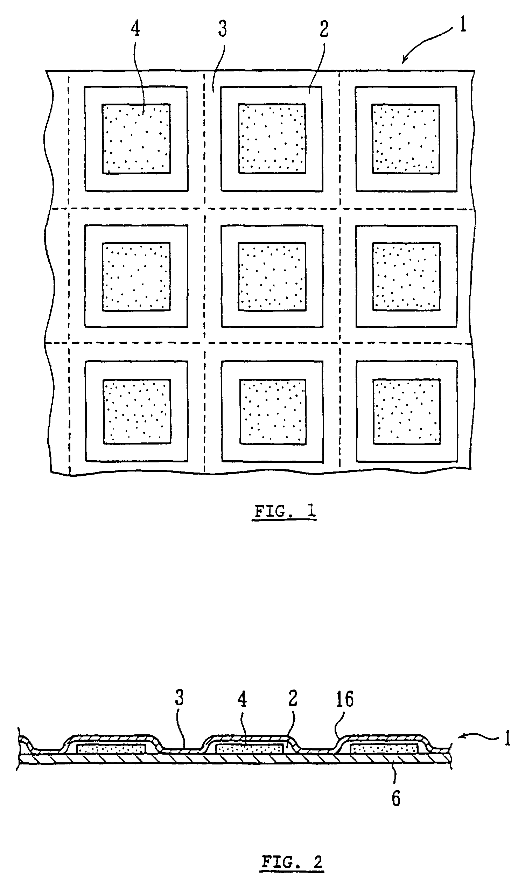

Now explaining preferred embodiments according to the present invention with reference to the accompanying drawings, FIGs. 1 and 2 are respectively a plain view and a longitudinal side elevation view of the inclusion packaged product according to the present invention. In these figures, the reference numeral "1" shows the present inclusion packaged product; the reference numeral "2", an inclusion cell; the reference numeral "3", a sealed section; the reference numeral "4", a thin-leaf inclusion article; the reference numeral "6", a base sheet; and the reference numeral "16", an overlapping sheet. As evident from FIG. 2, inclusion cell 2 is formed by overlapping base sheet 6 and overlapping sheet 16 together, and sealing prescribed sections of the sheets by a technique such as heat sealing to form sealed section 3. The sealing around inclusion cell 2 enables to keep articles to be included so as not to contact with external atmosphere. Although, base sheet 6 and overlapping sheet 16 in FIG. 2 are separately prepared and provided as two sheets, inclusion cell 2 may be formed by folding one sheet into two sheets, i.e., one for base sheet 6 and the other for overlapping sheet 16, and sealing prescribed sections of the sheets. The sealing technique is not restricted to heat sealing, but it can be those using adhesives or ultrasonics. Alternatively, adhesion, melting, deposition, and fixing can also be appropriately chosen depending on materials used for the base and overlapping sheets. In the inclusion packaged product 1 according to the present invention, the number of inclusion cell 2 for enclosing inclusion articles is not specifically restricted to, i.e., one or more numbers of inclusion cells 2 can be arranged in a row or rows. Preferably, with a viewpoint of production cost, at least three inclusion cells 2 should be respectively provided vertically and horizontally on base sheet 6 at prescribed intervals. Such an arrangement can be easily feasible by the later described present process. For the sake of actual use, sealed section 3 provided around inclusion cell 2 is usually formed to give a considerable width and can be provided with perforations to facilitate the cutting as shown by the broken lines in FIG. 1. Notch and depth of cutting, not shown in the figure, can be provided to facilitate the cutting of base sheet 6 and overlapping sheet 16. Alternatively, base sheet 6 and overlapping sheet 16 can be processed to be easily cut in a prescribed direction. As shown in FIG. 2, thin-leaf inclusion article 4 is enclosed within inclusion cell 2 in a manner that it can be freely detached from base sheet 6. Inclusion article 4 is usually placed in inclusion cell 2 one by one so that it can be processed to give a size slightly smaller than that of inclusion cell 2. As described later, inclusion article 4 can be formed by coating base sheet 6 with a solution of inclusion article 4 to allow the inclusion article 4 to adhere to base sheet 6 normally in an adhesion strength level of being easily detached by users' fingertips.

Base sheet 6 and overlapping sheet 16 are made of moisture-proof and thermostable materials such as sheets of synthetic polymers, semisynthetic polymers, and natural polymers. The types of the polymers are not specifically restricted to, but more preferably used are those which can be used in food, cosmetic, and pharmaceutical fields. Examples of such polymers are polyethylene, polypropylene, ethylene acetic vinyl polymer, polyvinyl acetate, polyvinyl chloride, polyvinylidene chloride, polytetra-fluoroethylene, polyvinylidene fluoride, polystyrene, polyacrylonitrile, polyacrylate, polymethacrylic acid, ethylene polypropylene copolymer, ethylene/acrylic acid copolymer, ethylene/acrylic acid methyl copolymer, propylene vinylchloride copolymer, ethylenevinyl alcohol copolymer, polyethylene terephthalate, polybutylene terephthalate, polycarbonate, nylon, normal cellophane, moistureproof cellophane, cellulose acetate, carboxymethyl cellulose, polyvinyl alcohol, hydrochlorinated rubbers, papers, and aluminum foil. If necessary, these polymers can be appropriately used in combination by laminating or treated with opaque and coloration treatments before use. The thickness of the sheets is not specifically restricted to, and it can be appropriately selected depending on purposes. Nevertheless, to facilitate the process, in the cause of applying the later described process according to the present invention, base sheet 6 and overlapping sheet 16 are preferably processed to give an equal thickness of about 1-100 µm, more preferably, about 10-50 µm, or the base sheet can preferably be processed to give a thickness thicker than the overlapping sheet.

Thin-leaf inclusion article 4 can be prepared by using, as bases, water-soluble polymers, preferably, polysaccharides, having a satisfactory water-solubility and membrane-formability, usable in food products, cosmetics, and pharmaceuticals. Examples of such water-soluble polymers are amylose, gum arabic, sodium alginate, elsinan, curdlan, carrageenan, karaya gum, agar, xanthan gum, chitin, guar gum, quince seed gum, mannan, gelatin, cellulose, tamarind gum, dextran, starches, tragacanth gum, pectin, pullulan, polyvinyl alcohol, locust bean gum, and derivatives thereof. These water-soluble polymers can be arbitrarily used in combination. Among these polymers, gum arabic, dextran, and pullulan are more preferably used because of their superior water-solubility and membrane-formability. More particularly, the use of pullulan enables the production of inclusion packaged products with a satisfactory flexibility, transparency, and quality.

The types and proportions of the ingredients of inclusion article 4 are varied depending on purposes. When applying the present invention to food products, the following ingredients can be used in adequate amounts after pulverized on demands: Seasonings such as sodium inosinate, sodium guanylate, sodium glutamate, soy sauces, *misos*, sauces, *sakes*, foreign wines, *mirins*, vinegars, and salts; extract seasonings such as yeast extracts, meat extracts, fish meat extracts, vegetable extracts, fruit extracts, seaweeds' extracts, and propolises; sours such as adipic acid, citric acid, δ-D-gluconolacton, gluconic acid, acetic acid, tartaric acid, succinic acid, lactic acid, and malic acid; sweeteners such as hydrangea, glycyrrhizin, stevioside, rebaudioside, peptide sweetener, saccharin, and cyclamate; flavors such as origanum oil, grape fruit oil, sweet orange oil, davana oil, Japanese mint oil, vanilla oil, hyssop oil, bitter almond oil, bitter orange oil, pepper mint oil, perilla, mandarin oil, lemon oil, and rose oil; seasonings such as cassia, capsicum, cumin, clary sage, coriander, cinnamon, ginger, thyme, nutmeg, pepper, and mustard; and food materials such as processed- or unprocessed meats, fish meats, vegetables, fruits, seaweeds, and mushrooms. When using oil-soluble flavors, they can be previously emulsified in a conventional manner before use. In the cause of applying the present invention to pharmaceuticals, the following pharmaceutically-acceptable ingredients can be used in adequate amounts: Anodynes/antiphlogistics such as acetaminophen, phenacetin, aspirin, aminopyrine, dipyron, oxyphenbutazone, phenylbutazone, mefenamic acid, flufenamic acid, diclofenac, alclofenac, ibuprofen, flurbiprofen, salicylic acid, methyl salicylate, menthol, camphor, sulindac, sodium tolmetinate, naproxen, fenbufen, indomethacin, and colchicine; antiphlogistic enzymes such as α-chymotrypsin; antiphlogistic steroids such as hydrocortisone, prednisolone, triamcinolone, dexamethasone, and betamethasone; antihistamines such as diphenhydramine hydrochloride and dexchlorpheniramine maleate; antibiotics and germicides such as tetracycline, leucomycin or kitasamycin, fradiomycin, penicillin, and derivatives thereof, cephalosporin derivatives, chloramphenicol, fradiomycin and derivatives thereof, and erythromycin; chemotherapeutic agents such as sulfathiazole and nitrofurazone; anaesthetics such as lidocaine and benzocaine; cardiacs such as digitalis and digoxin; vasodilators such as nitroglycerin and papaverine hydrochloride; antitussives and expectorants such as codeini phosphas and isoproterenol sulfate; oral bactericides such as chlorhexidine hydrochloride, 4-hexyl resorcinol, and ethacridine; drugs for digestive organs such as pepstatin, azulene, phenovalin, and methylmethionine sulfonium chloride; hypoglycemic agents such as insulin; and other drugs such as hemostatics, hypotensive agents, sedatives, anti-verigeneous drugs, antitumor agents, crude drug extracts, and vitamins. When using the above ingredients, they are satisfactorily placed in each cell 2, provided in inclusion packaged product 1, after formed into thin-leaf inclusion articles which contain sufficient amounts of the ingredients in a unit dose form or a divisor dose form with respect to each ingredient. The pharmaceuticals thus obtained can be administered to humans via peroral, intubation, percutaneous, and permucosal administrations to treat and/or prevent diseases.

Alternative ingredients to be incorporated in inclusion article 4 include cosmetically-acceptable ingredients such as foundations, rouges, eye shadows, eye brows, pearl color compounds, basal creams, agents for growth and regeneration of hair, and bath salts, i.e., cosmetic colors, crude drug extracts, ultraviolet-absorbing agents, and skin-beautifying ingredients, flavors, and ingredients for growth and regeneration of hair. The present invention can be arbitrarily used in agricultural fields including plant seeds, fertilizers, pet foods, and feeds.

As described above, the inclusion packaged product according to the present invention can be widely applicable to food product, cosmetic, and pharmaceutical fields, etc. In any cases, to stabilize the ingredients, improve the property of the thin-leaf inclusion articles, and control the releasing strength of the inclusion articles from the base sheet, the following ingredients can be used in combination with the above ingredients; viscosity-imparting agents such as oligosaccharides and dextrins; humectants such as glycerine, xylitol, sorbitol, propylene, sodium lactate, sodium pyrrolidone carbonate, polyethylene glycol, carboxymethyl cellulose, alginic acid, serine, maltitol, galactosamine, soluble collagen, elastin, sodium hyaluronate, chondroitin sulfate, and aspartic acid; surfactants such as sucrose fatty acid ester, maltose fatty acid ester, maltitol fatty acid ester, trehalose fatty acid ester, and fatty acid glycerol ester; and others such as emulsifiers, colorants, stabilizers, antioxidants, preservatives, and germicides. Inclusion articles with printed pictures using adequate colorants can be arbitrarily used as **"TRANSFER-SHEET"** for printing pictures on food products, etc.

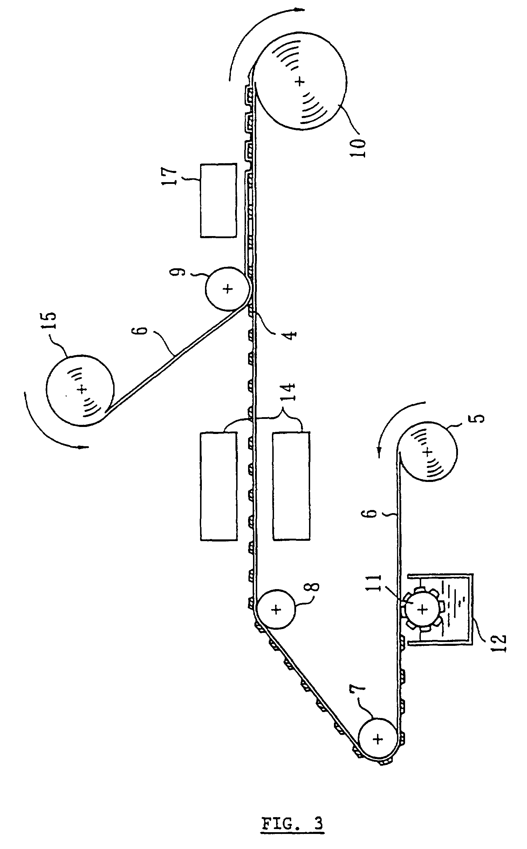

The inclusion packaged product according to the present invention can be produced by a variety of methods; usually it can be produced by forming a thin-leaf inclusion article on the base sheet, laminating an overlapping sheet on the base sheet, and sealing the adequate sections of the sheets; a solution containing about 10 to 50 % by weight of article of any of the above water-soluble polymers, preferably, about 20 to 40 % by weight of article, is prepared, then mixed with one or more ingredients depending on purposes. Varying depending on the types and uses of the ingredients, incorporation of excessive amounts of the ingredients may lower the flexibility and/or solubility of thin-leaf inclusion articles so that ingredients, that exert a satisfactory activity with only a small amount, preferably be incorporated in the solution as low as possible; usually in an amount of not higher than about 40%, preferably, not higher than 30% to the water soluble polymer used, on a dry solid basis (d.s.b.). These ingredients should not necessarily be dissolved or may be in suspension forms as solids with sizes that do not hinder the formation of thin-leaves. The solutions for inclusion articles thus obtained can be intermittently coated on a plurality of sections on the base sheet at prescribed intervals, and dried at temperatures over ambient temperature, usually, about 40-100°C, preferably, about 60-90°C into thin-leaf inclusion articles. An overlapping sheet is laminated on either side with the thin-leaf inclusion articles formed on the base sheet, and then the inclusion articles are enclosed in inclusion cells, formed between the base sheet and the overlapping sheet, by sealing prescribed sections of the sheets to surround the articles and to be freely detachable by a technique such as heat sealing. The thickness of the thin-leaf inclusion articles can be varied depending on purposes and easily controlled within the range of about 10-500 µm, preferably, about 10-100 µm, by appropriately changing the concentration of water-soluble polymers and the coating rate of the solutions, etc. The above inclusion packaged product with a satisfactorily high-quality is continuously produced by applying the present process at a lowest possible cost and labor. The present invention will be explained with reference to FIG. 3.

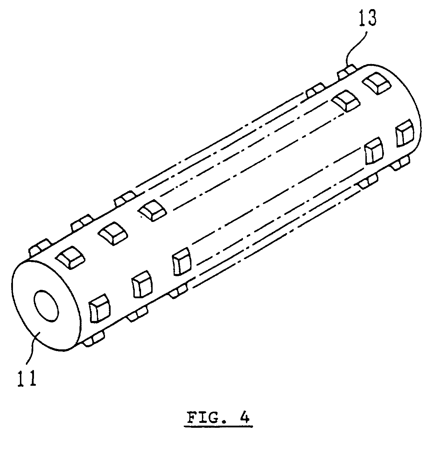

In FIG. 3, the reference numeral "5" is a base sheet reservoir roll, and base sheet 6 is transported from base sheet reservoir roll 5 to product-winding roll 10 via sending rolls 7, 8 and 9. The reference numeral "11" is a coating roll used for intermittently coating a solution of inclusion article 4, contained in reservoir tank 12, on base sheet 6 at prescribed intervals. As shown in FIG. 4, coating roll 11 has a structure of conventional roll provided with projections 13 around the roll, and the rotation of coating roll 11 allows to intermittently coat a solution of an inclusion article, adhered to the edges of projections 13, on prescribed sections of the base sheet 6 while base sheet 6 is being sent out. The reference numeral "14" is a dryer used for drying the solution, coated on base sheet 6, with hot air or far infrared rays. The reference numeral "15" is a reservoir roll for overlapping sheet, and from which overlapping sheet 16 is sent out via roll 9 to be laminated on the upper side of base sheet 6. The reference numeral "17" is a sealing machine such as heat sealer used for sealing appropriate sections of base sheet 6 and overlapping sheet 16 to enclose thin-leaf inclusion article 4 in inclusion cell 2, formed between base sheet 6 and overlapping sheet 16, in a manner that the inclusion article 4 can be freely detached. The inclusion packaged product thus obtained is wound by product-winding roll 10. The wound product is cut to give desired sizes depending on purposes. The production scheme of FIG. 3 is only an example of a roller coating using coating roll 11, and the present process should not be restricted to the coating; other conventional coating methods such as gravure coating, bar coating, air-knife coating, screen coating, etc., can be employed in the present invention. Referring to coating roll 11 in FIG. 4, a plurality of rows of projections 13 are provided, however, the number of rows can be appropriately changed on demands.

The following examples explain the present invention in more detail:

### Example 1

### Cachou

| Cachou | |
|---|---|
| Ingredients | Content (part by weight) |
| Pullulan | 19.2 |
| Locust bean gum | 1.2 |
| Glycerin | 0.1 |
| Sorbitol | 0.8 |
| Dextrin (DE 25) | 3.8 |
| Water | 71.0 |
| Emulsified Japanese mint oil | 3.0 |
| "**ASPARTAME**", a synthetic peptide sweetener commercialized by Ajinomoto Co. Ltd., Tokyo, Japan | 0.3 |
| Citric acid | 0.3 |
| Sucrose fatty acid ester | 0.3 |

An aqueous solution consisting of the above ingredients was prepared and poured into reservoir tank 12 in FIG. 3, and polyethylene sheets with 1.1 m wide, 30 and 10 µm thick, as base sheet 6 and overlapping sheet 16, respectively, were set to a roller coating machine and moved at a rate of 7 m/min. A hot-air-blowing-type dryer was used as dryer 14, and air heated to 80°C was blown to the contents from the lower and upper sides of base sheet 6. The edge of projection 13 on coating roll 11 was shaped to form thin-leaf inclusion article 4, with a size of 20 x 30 mm after drying, formed on base sheet 6. Thus, it was obtained a relatively-wide-and-long inclusion packaged product with regularly repeating rows of 27 inclusion cells, that enclose thin-leaf cachous, about 30 µm thick, spaced one centimeter apart and placed at regular intervals of about one centimeter as a sealed section in the width direction of base sheet 6.

In this product, the thin-leaf inclusion cachous are distributed to inclusion cells 2, formed between base sheet 6 and overlapping sheet 16. You can enjoy a refreshing flavor and sweetness throughout your mouth by taking out them from the product and placing them in your mouth. The inclusion packaged product can be cut to give an appropriate size, for example, cut into about one to ten sets of inclusion cells, which can be easily curled or folded to ease handy to carry in your bags and pockets, and you can freely take out and taste them even before others so that you can prevent unsatisfiable mouth-smell and refresh your feeling without minding public manners and etiquettes in public places.

### Example 2

| Sweetener | |
|---|---|
| Ingredients | Content (part by weight) |
| Pullulan | 25.0 |
| " **ASPARTAME** ", a synthetic peptide sweetener commercialized by Ajinomoto Co., Ltd., Tokyo, Japan | 4.0 |
| Sucrose fatty acid ester | 1.0 |
| Water | 70.0 |

Similarly as in Example 1 except for using both the aqueous solution consisting of the above ingredients and polypropylene sheets, 30 µm thick and 1.1 m wide each, as base sheet 6 and overlapping sheet 16 in FIG. 3, it was obtained a relatively-wide-and-long inclusion packaged product with regularly repeating rows of 27 inclusion cells, that enclose thin-leaves with sweeteners, about 50 µm thick and 20 x 20 mm each, spaced one centimeter apart and placed at regular intervals of about one centimeter as a sealed section in the width direction of base sheet 6.

The inclusion packaged product, enclosing distributed thin-leaves with sweeteners, can sweeten a cup of coffee with only a piece of thin-leaf enclosed in each inclusion cell. The product is easily handleable, and the thin-leaves are prevented from contacting with external atmosphere. Because of these, you can cut them into appropriate sizes and taste them even in outdoors without any inconvenience.

### Example 3

| Seasoning | |
|---|---|
| Ingredients | Content (part by weight) |
| Powder of dried bonito flakes | 2.0 |
| Powder of parched sesame | 2.0 |
| Soy sauce | 1.0 |
| Pullulan | 19.0 |
| Sucrose fatty acid ester | 1.0 |
| Water | 75.0 |

A relatively-wide-and-long inclusion packaged product with regularly repeating rows of 15 inclusion cells, that enclose thin-leaves with seasonings, about 60 µm thick and 50 x 50 mm each, spaced one centimeter apart and placed at regular intervals of about one centimeter as a sealed section in the width direction of base sheet 6, was obtained similarly as in Example 1 except for using a homogeneously mixed suspension consisting of the above ingredients, and a Japanese paper, 1.1 m wide, laminated with polyethylene sheets, 30 µm thick, as base sheet 6 and overlapping sheet 16 in FIG. 3.

The thin-leaves inclosed in the inclusion packaged product have a satisfactory flexibility and folding endurance, and keep the color, gloss, flavor, and taste for a relatively-long period of time. Because of these properties, it can be suitably used as rolling materials for foods such as "*onigiri* " (a rice ball).

### Example 4

| Medicament | |
|---|---|
| Ingredients | Content (part by weight) |
| Aspirin | 1.0 |
| Pullulan | 15.0 |
| Mannan | 3.0 |
| Fatty acid glycerol ester | 1.0 |
| Water | 80.0 |

Similarly as in Example 1 except for using an aqueous solution consisting of the above ingredients, and polyacrylic acid sheets, 40 µm thick and 1.1 m wide each, as base sheet 6 and overlapping sheet 16 in FIG. 3, it was obtained a relatively-wide-and-long inclusion packaged product with regularly repeating rows of 22 inclusion cells, that enclose thin-leaves with aspirin, about 30 µm thick and 30 x 40 mm each, spaced one centimeter apart and placed at regular intervals of about one centimeter as a sealed section in the width direction of base sheet 6.

The inclusion packaged product gradually releases aspirin with an analgesic-antipyretic activity, and this prevents a rapid increase of the concentration of aspirin in the intestinal organs after the administration, and retains a satisfactory effect for a relatively-long period of time. In the product, a thin-leaf as a dose is physically separated from external atmosphere so that the product can be cut into appropriate pieces to optimize handy to carry for use in outdoors and on tripping.

### Example 5

| Cosmetic | |
|---|---|
| Ingredients | Content (part by weight) |
| Pullulan | 4.2 |
| Gum arabic | 0.5 |
| Carrageenan | 0.1 |
| Water | 43.7 |
| Titanium oxide | 19.0 |
| Barium sulfate | 1.5 |
| Red iron oxide | 4.0 |
| Yellow iron oxide | 1.5 |
| Black iron oxide | 0.3 |
| Talc | 0.5 |
| Lecithin | 0.5 |
| Polyoxyethylene sorbitan monooleate (20 E.O.) | 0.2 |
| Propylene glycol | 11.0 |
| Dimethylpolysiloxane | 13.0 |

A relatively-wide-and-long inclusion packaged product with regularly repeating rows of 15 inclusion cells, that enclose thin-leaves with foundations, about 60 µm thick and 50 x 50 mm each, spaced one centimeter apart and placed at regular intervals of about one centimeter as a sealed section in the width direction of base sheet 6, was obtained similarly as in Example 1 except for using an aqueous solution consisting of the above ingredients, and polypropylene sheets, 20 µm thick and 1.1 m wide each, as base sheet 6 and overlapping sheet 16 in FIG. 3, and moving the sheets at a rate of 5 m/min.

The inclusion packaged product is easily transportable, sufficient in strength, and satisfactory in gloss, and it does not become sticky when touched with hands and keeps the smooth surface. When wiped with a moistened sponge, it easily dissolves and had a satisfactory handleability and waterproofing.

### Example 6

| Seed | |
|---|---|
| Ingredients | Content (part by weight) |
| Pullulan | 25.0 |
| Locust bean gum | 5.0 |
| Sucrose fatty acid ester | 1.0 |
| Parsley seed | 4.0 |
| Water | 65.0 |

A relatively-wide-and-long inclusion packaged product with regularly repeating rows of 15 inclusion cells, that enclose thin-leaves with the seeds, about 100 µm thick and 50 x 50 mm each, spaced one centimeter apart and placed at regular intervals of about one centimeter as a sealing area in the width direction of base sheet 6 was prepared similarly as in Example 1 except for using a suspension consisting of the above ingredients, polyethylene sheets, 30 µm thick and 1.1 m wide each, as base sheet 6 and overlapping sheet 16 in FIG. 3, dryer 14 as a hot-air-blowing-type dryer, and drying conditions of a relatively-low temperature.

The inclusion packaged product keeps a relatively-high germination percentage of the seeds for a satisfactorily-long period of time. Since the thin-leaves are packaged in the product, they are prevented from being melted by sweat when taken in hands, and this facilitates the seeding work. Also the leaves are readily melted by water sprinkled after the seeding, resulting in the exposure and germination of the seeds.

As described above, the present invention relates to an inclusion packaged product which is easily handled and transported. Since the thin-leaf inclusion articles packaged in the product do not contact with external atmosphere, they have substantially no sanitary problem. The product is easily produced by the process according to the present invention.

The present invention with such an outstanding effect would significantly contribute to this art.

## Claims

1. An inclusion packaged product, which comprises:
(i) an inclusion cell formed by a base sheet and an overlapping sheet, and
(ii) a thin-leaf inclusion article enclosed in said inclusion cell in a manner that said thin-leaf inclusion article can be freely detached from said base sheet, **characterised in that** the thin-leaf inclusion article contains a water-soluble polymer at a concentration of about 10 to 50 % by weight of article.

2. A product according to claim 1, wherein a plurality of the inclusion cells are provided crosswise on the base sheet.

3. A product according to claim 1 or claim 2, wherein the inclusion cell is formed by sealing prescribed sections of the base sheet and the overlapping sheet facing each other.

4. A product according to any one of claims 1 to 3, wherein the thin-leaf article is formed on the base sheet part of the inclusion cell.

5. A product according to any one of claims 1 to 4, wherein the water-soluble polymer is a member selected from the group consisting of amylose, gum arabic, sodium alginate, elsinan, curdlan, carrageenan, karaya gum, agar, xanthan gum, chitin, guar gum, quince seed gum, mannan, gelatin, cellulose, tamarind gum, dextran, starches, tragacanth gum, pectin, pullulan, polyvinyl alcohol, locust bean gum, and derivatives thereof.

6. A product according to any one of claims 1 to 5, wherein the inclusion article has a thickness of about 10-500 µm.

7. A product according to any one of claims 1 to 6, wherein the thickness of the overlapping sheet is not thicker than that of the base sheet.

8. A product according to any one of claims 1 to 7, wherein the base sheet and the overlapping sheet have a thickness of about 1-100 µm, respectively.

9. A product according to any one of claims 1 to 8, wherein the polymers are members selected from the group consisting of polyethylene, polypropylene, ethylene acetic vinyl polymer, polyvinyl acetate, polyvinyl chloride, polyvinylidene chloride, polytetra-fluoroethylene, polyvinylidene fluoride, polystyrene, polyacrylonitrile, polyacrylate, polymethacrylic acid, ethylene polypropylene copolymer, ethylene acrylic acid copolymer, ethylene acrylic acid methyl copolymer, propylene vinylchloride copolymer, ethylenevinyl alcohol copolymer, polyethylene terephthalate, polybutylene terephtalate, polycarbonate, nylon, normal cellophane, moistureproof cellophane, cellulose acetate, carboxymethyl cellulose, polyvinyl alcohol, hydrochlorinated rubbers, papers, and aluminium foil.

10. A product according to any one of claims 1 to 9, wherein the inclusion article contains a member selected from the group consisting of food-, cosmetic-, and pharmaceutical-ingredients.

11. A process for producing an inclusion packaged product as defined in any one of claims 1 to 10, which comprises the steps of:
(1) providing a solution of an inclusion article containing a water-soluble polymer;
(2) coating a base sheet with the solution of the inclusion article;
(3) drying the solution coated on the base sheet; and
(4) placing an overlapping sheet on the base sheet and sealing prescribed sections to the sheets to surround the area coated with the solution,
wherein the water-soluble polymer is present in the thin-leaf inclusion article at a concentration of about 10 to 50 % by weight of article so that the thin-leaf inclusion article can be freely detached from the base sheet.

12. A process according to claim 11, wherein the solution is applied to prescribed areas on the base sheet at prescribed intervals.

13. A process according to claim 11 or claim 12, wherein the base sheet and the overlapping sheet are heat sealed.

14. A process according to any one of claims 11 to 13, wherein the solution contains a surfactant.

15. A process according to claim 14, wherein the surfactant is a member selected from the group consisting of sucrose fatty acid ester, maltose fatty acid ester, maltitol fatty acid ester, trehalose fatty acid ester, and fatty acid glycerol ester.

16. A process according to any one of claims 11 to 15, wherein the drying step (3) is carried out at a temperature of about 40-100°C.

## Patentansprüche

1. Inklusionsprodukt, welches umfasst:
(i) eine aus einer Basisfolie und einer überlappenden Folie gebildete Inklusionszelle, und
(ii) einen dünnblättrigen Inklusionsartikel, der in der Inklusionszelle in einer Weise eingeschlossen ist, dass der dünnblättrige Inklusionsartikel von der Basisfolie ungehindert losgelöst werden kann, **dadurch gekennzeichnet, dass** der dünnblättrige Inklusionsartikel ein wasserlösliches Polymer mit einer Konzentration von etwa 10 bis 50 Gew.-% bezogen auf den Artikel enthält.

2. Produkt nach Anspruch 1, bei dem mehrere der Inklusionszellen kreuzweise auf der Basisfolie vorhanden sind.

3. Produkt nach Anspruch 1 oder Anspruch 2, bei dem die Inklusionszelle durch Versiegeln von vorbestimmten Bereichen der Basisfolien und der sich gegenüber liegenden überlappenden Folien gebildet sind.

4. Produkt gemäß einem der Ansprüche 1 bis 3, bei dem der dünnblättrige Inklusionsartikel auf der Basisfolie als Teil der Inklusionzelle gebildet ist.

5. Produkt gemäß einem der Ansprüche 1 bis 4, bei dem das wasserlösliche Polymer ausgewählt ist aus der Gruppe bestehend aus Amylose, Gummi Arabicum, Natriumalginat, Elsinan, Curdlan, Carrageen, Karayagummi, Agar, Xanthangummi, Chitin, Guargummi, Quittenkerngummi, Mannane, Gelatine, Zellulose, Tamarindengummi, Dextran, Stärke, Tragantgummi, Pektin, Pellulan, Polyvinylalkohol, Johannesbrotgummi und Derivate derselben.

6. Produkt gemäß einem der Ansprüche 1 bis 5, bei dem der Inklusionsartikel eine Dicke von etwa 10-500 µm aufweist.

7. Produkt gemäß einem der Ansprüche 1 bis 6, bei dem die Dicke der überlappenden Folie nicht dicker als diejenige der Basisfolie ist.

8. Produkt gemäß einem der Ansprüche 1 bis 7, bei dem die Basisfolie beziehungsweise die überlappende Folie eine Dicke von etwa 1-100 µm aufweisen.

9. Produkt gemäß einem der Ansprüche 1 bis 8, bei dem die Polymere ausgewählt sind aus der Gruppe bestehend aus Polyethylen, Polypropylen, Ethylen/Vinylacetat-Copolymer, Polyvinylacetat, Polyvinylchlorid, Polyvinylidenchlorid, Polytetrafluorethylen, Polyvinylidenfluorid, Polystyrol, Polyacrylnitril, Polyacrylat, Polymethacrylsäure, Ethylen/Polypropylen Copolymer, Ethylen/Arcylsäure Copolymer, Ethylen/Acrylsäuremethyl-Copolymer, Propylen/Vinylchlorid-Copolymer, Ethylen/Vinylalkohol-Copolymer, Polyethylenterephthalat, Polybutyleneterephthalat, Polycarbonat, Nylon, normales Zellophan, feuchtigkeitsbeständiges Zellophan, Zelluloseacetat, Carboxymethyl-Zellulose, Polyvinylalkohol, hydrochlorierte Gummi, Papiere und Aluminiumfolien.

10. Produkt gemäß einem der Ansprüche 1 bis 9, bei dem der Inklusionsartikel einen Bestandteil enthält, der ausgewählt ist aus der Gruppe bestehend aus Nahrungsmittel-, Kosmetik- und Pharmazeutik-Bestandteilen.

11. Verfahren zur Herstellung eines in einem der Ansprüche 1 bis 10 definierten Inklusionsprodukts, welches die Schritte umfasst:
(1) Bereitstellen einer Lösung eines Inklusionartikels enthaltend ein wasserlösliches Polymer;
(2) Beschichten einer Basisfolie mit der Lösung des Inklusionsartikels;
(3) Trocknen der die Basisfolie beschichtenden Lösung, und
(4) Aufbringen eines überlappenden Blatts auf die Basisfolie und Versiegeln von vorbestimmten Bereichen auf den Folien, um die mit der Lösung beschichteten Bereiche zu umgeben,
wobei das wasserlösliche Polymer in dem dünnblättrigen Inklusionsartikel in einer Konzentration von etwa 10 bis 50 Gew.-% bezogen auf den Artikel vorliegt, so dass der dünnblättrige Inklusionsartikel von der Basisfolie ungehindert losgelöst werden kann.

12. Verfahren gemäß Anspruch 11, bei dem die Lösung auf vorbestimmte Gebiete der Basisfolie in vorbestimmten Abständen aufgetragen wird.

13. Verfahren gemäß Anspruch 11 oder 12, bei dem die Basisfolie und die überlappende Folie wärmeversiegelt werden.

14. Verfahren gemäß einem der Ansprüche 11 bis 13, bei dem die Lösung ein Tensid enthält.

15. Verfahren gemäß Anspruch 14, bei dem das Tensid ausgewählt ist aus der Gruppe bestehend aus Rohrzucker-Fettsäure-Ester, Maltose-Fettsäure-Ester, Maltinol-Fettsäure-Ester, Trehalose-Fettsäure-Ester und Fettsäure-Glycerolester.

16. Verfahren gemäß einem der Ansprüche 11 bis 15, bei dem der Trocknungsschritt (3) bei einer Temperatur von etwa 40-100°C ausgeführt wird.

## Revendications

1. Produit d'inclusion emballé comprenant :
(i) une cellule d'inclusion formée au moyen d'une feuille de base et d'une feuille de recouvrement, et
(ii) un article d'inclusion en feuille mince enfermé dans ladite cellule d'inclusion d'une manière telle que ledit article d'inclusion en feuille mince peut être librement détaché de ladite feuille de base,
**caractérisé en ce que** l'article d'inclusion en feuille mince contient un polymère soluble dans l'eau à une concentration d'environ 10 à 50 % en poids d'article.

2. Produit selon la revendication 1, dans lequel il est prévu une pluralité de cellules d'inclusion en travers de la feuille de base.

3. Produit selon la revendication 1 ou la revendication 2, dans lequel la cellule d'inclusion est formée par scellement de sections prescrites de la feuille de base et de la feuille de recouvrement qui se font face.

4. Produit selon l'une quelconque des revendications 1 à 3, dans lequel l'article en feuille mince est formé sur la feuille de base qui fait partie de la cellule d'inclusion.

5. Produit selon l'une quelconque des revendications 1 à 4, dans lequel le polymère soluble dans l'eau est un élément choisi dans l'ensemble constitué des amylose, gomme arabique, alginate de sodium, elsinan, curdlan, carraghénine, gomme karaya, gélose, gomme xanthane, chitine, gomme de guar, gomme de graines de cognassier, mannane, gélatine, cellulose, gomme de tamarin, dextranne, amidons, gomme adragante, pectine, pullulanne, alcool polyvinylique, gomme de fèves de caroube, et des dérivés de ceux-ci.

6. Produit selon l'une quelconque des revendications 1 à 5, dans lequel l'article d'inclusion a une épaisseur d'environ 10 à 500 µm.

7. Produit selon l'une quelconque des revendications 1 à 6, dans lequel l'épaisseur de la feuille de recouvrement ne dépasse pas celle de la feuille de base.

8. Produit selon l'une quelconque des revendications 1 à 7, dans lequel la feuille de base et la feuille de recouvrement ont respectivement une épaisseur d'environ 1 à 100 µm.

9. Produit selon l'une quelconque des revendications 1 à 8, dans lequel les polymères sont des éléments choisis dans l'ensemble constitué des polyéthylène, polypropylène, polymère d'éthylène vinylacétique, acétate de polyvinyle, chlorure de polyvinyle, chlorure de polyvinylidène, polytétrafluoroéthylène, fluorure de polyvinylidène, polystyrène, polyacrylonitrile, polyacrylate, acide polyméthacrylique, copolymère d'éthylène et de polypropylène, copolymère d'éthylène et d'acide acrylique, copolymère d'éthylène, d'acide acrylique et de méthyle, copolymère de propylène et de chlorure de vinyle, copolymère d'éthylène et d'alcool vinylique, téréphtalate de polyéthylène, téréphtalate de polybutylène, polycarbonate, Nylon, Cellophane normale, Cellophane étanche à l'humidité, acétate de cellulose, carboxyméthylcellulose, alcool polyvinylique, caoutchoucs hydrochlorés, papiers et feuille d'aluminium.

10. Produit selon l'une quelconque des revendications 1 à 9, dans lequel l'article d'inclusion contient un élément choisi dans l'ensemble constitué d'ingrédients alimentaires, cosmétiques et pharmaceutiques.

11. Procédé de préparation d'un produit d'inclusion emballé tel que défini dans l'une quelconque des revendications 1 à 10, comprenant les étapes consistant à :
(1) fournir une solution d'un article d'inclusion contenant un polymère soluble dans l'eau ;
(2) revêtir une feuille de base avec la solution de l'article d'inclusion ;
(3) sécher la solution appliquée sur la feuille de base ; et
(4) placer une feuille de recouvrement sur la feuille de base et sceller des sections prescrites sur les feuilles de façon à entourer l'aire revêtue de la solution,
dans lequel le polymère soluble dans l'eau est présent dans l'article d'inclusion en feuille mince à une concentration d'environ 10 à 50 % en poids de l'article, de sorte que l'article d'inclusion en feuille mince peut être librement détaché de la feuille de base.

12. Procédé selon la revendication 11, dans lequel on applique la solution sur des zones prescrites sur la feuille de base à des intervalles prescrits.

13. Procédé selon la revendication 11 ou la revendication 12, dans lequel la feuille de base et la feuille de recouvrement sont thermosoudées.

14. Procédé selon l'une quelconque des revendications 11 à 13, dans lequel la solution contient un agent tensio-actif.

15. Procédé selon la revendication 14, dans lequel l'agent tensio-actif est un élément choisi dans l'ensemble constitué des suivants : ester d'acide gras et de saccharose, ester d'acide gras et de maltose, ester d'acide gras et de maltitol, ester d'acide gras et de tréhalose et ester d'acide gras et de glycérol.

16. Procédé selon l'une quelconque des revendications 11 à 15, dans lequel on effectue l'étape de séchage (3) à une température d'environ 40 à 100°C.
